# FASCICULE DE BREVET EUROPEEN

(11) **EP 0 759 674 B1**
(45) Date de publication et mention de la délivrance du brevet: **24.05.2000**
(21) Numéro de dépôt: 96401699.2
(22) Date de dépôt: 30.07.1996
(51) Int. Cl.: H04N 5/33

(54) **Procédé pour donner l'impression de profondeur dans une image thermique et caméra pour la mise en oeuvre de ce procédé**
Verfahren zum Verleihen von Tiefeneindruck in einem thermischen Bild und Kamera zur Durchführung dieses Verfahrens
Method for giving a depth impression in a thermal image and camera for carrying out the method

(30) Priorité: 22.08.1995 FR 9509974
(43) Date de publication de la demande: 26.02.1997
(73) Titulaire: THOMSON-CSF, 75008 Paris (FR)
(72) Inventeur: Fontanella, Jean-Claude, Thomson-CSF, SCPI, 92402 Courbevoie Cedex (FR); Fouilloy, Jean-Pierre, Thomson-CSF, SCPI, 92402 Courbevoie Cedex (FR)
(74) Mandataire: Lincot, Georges

(56) Documents cités:
- EP-A- 0 412 886
- EP-A- 0 443 906
- EP-A- 0 504 023
- WO-A-84/01872

## Description

La présente invention concerne le domaine des caméras thermiques utilisées pour l'observation du paysage, en particulier dans un aéronef, et la recherche d'une impression de profondeur, c'est-à-dire de relief, dans l'image fournie par ces caméras.

Les caméras thermiques opérant, par exemple, dans l'une des bandes de transmission atmosphérique 3-5 micromètres, 8-12 micromètres, fournissent des images dont les contrastes évoluent peu avec la distance, tout au moins dans la gamme de quelques kilomètres habituellement utilisée pour piloter un aéronef, surtout quand ce dernier est un hélicoptère. De ce fait les plans successifs du paysage ne sont pas faciles à différencier et les pilotes sont gênés pour apprécier les distances.

La présente invention a pour but d'éviter ou, pour le moins, de réduire cet inconvénient.

Pour cela deux images de deux bandes spectrales différentes, convenablement choisies dans le spectre infrarouge, sont mélangées de manière à obtenir une image qui rappelle les images obtenues avec des caméras travaillant en lumière visible ; ceci est décrit, en particulier, dans les revendications 1 et 3 du présent document.

Il est à noter par ailleurs qu'il est connu d'utiliser des caméras dans le proche ultraviolet pour les détails que peut donner l'image et cela malgré une transmission atmosphérique moins bonne qu'en lumière visible et qu'en proche infrarouge. L'image obtenue en proche ultraviolet étant généralement plate, sans profondeur, il est connu de la mélanger à une image en proche infrarouge, ce qui élimine certains détails mais donne du relief. L'image obtenue à partir de deux images, l'une en proche ultraviolet et l'autre en proche infrarouge, n'est valable que pour des distances assez faibles inférieures à deux kilomètres, du fait de la mauvaise transmission, dans l'atmosphère, des ondes du spectre ultraviolet.

Il est également connu, par la demande PCT WO 84/01872, d'utiliser deux images de deux bandes spectrales différentes en retardant l'affichage, sur un même écran, de l'une des deux images par rapport à l'affichage de l'autre image ; ceci permet de repérer les mouvements sur l'écran : les deux images relatives à un objet en mouvement ne sont plus exactement superposées mais décalées l'une par rapport à l'autre d'où une modification des couleurs là où les images ne sont plus superposées, modification qui est révélatrice d'un mouvement. Mais si un tel procédé d'observation permet de détecter un déplacement dans le paysage observé, il ne conduit nullement à donner une impression de profondeur.

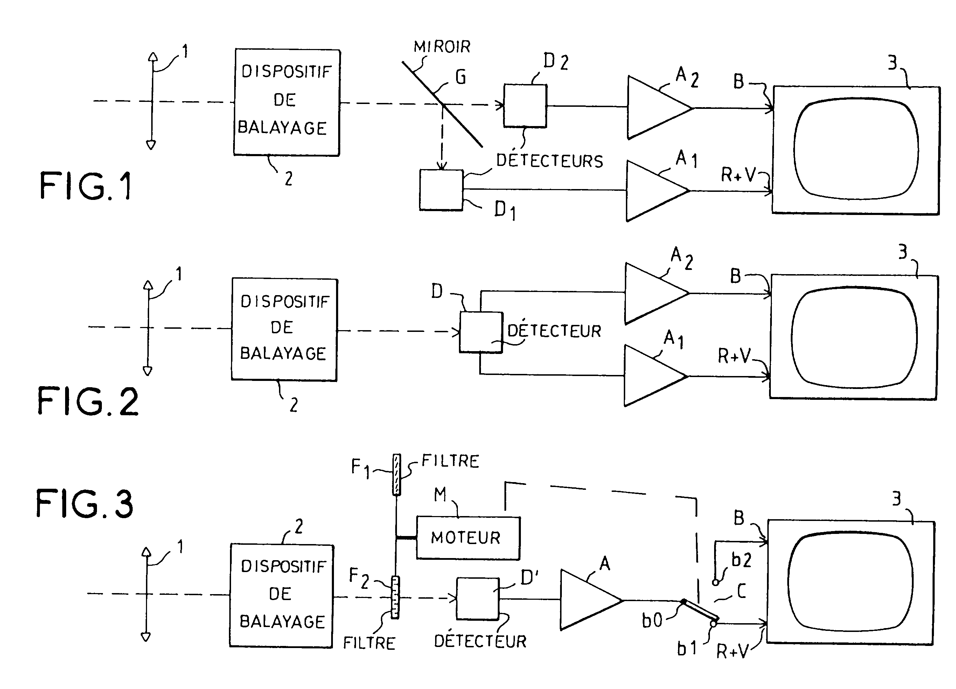

La présente invention sera mieux comprise et d'autres caractéristiques apparaîtront à l'aide de la description ci-après et
- des figures 1, 2, 3 s'y rapportant qui sont trois schémas de caméras selon l'invention.

Sur les figures les éléments correspondants sont désignés par les mêmes repères. Il est à noter de plus que les dispositifs de synchronisation précise, relevant de la technologie courante, n'ont pas été représentés en vue de rendre les dessins plus clairs et de simplifier l'exposé.

Le problème était de produire une impression de profondeur dans une image thermique. Les études qui ont été faites pour résoudre ce problème ont conduit à réaliser trois caméras selon les trois schémas ci-joints. Ces caméras ont en commun d'élaborer deux images initiales dans deux bandes spectrales différentes :
- une première image dans une première bande de fréquences où la transmission atmosphérique est bonne ; cette première image est destinée à former l'image de base de l'image finale, c'est-à-dire à avoir la contribution la plus grande à l'image finale,
- une seconde image dans une seconde bande de fréquences où la transmission atmosphérique est médiocre, cette bande étant choisie en fonction de la gamme de distances à observer.

Les deux images peuvent alors être affichées simultanément sur un même écran couleur pour constituer l'image finale. La seconde image, c'est-à-dire celle correspondant à la bande de fréquence où la transmission est médiocre, est de préférence, affichée en bleu afin que le rayonnement propre de l'atmosphère apparaisse comme un voile bleu plus important sur les plans éloignés que sur les plans proches, comme cela se produit dans le spectre visible. Il en résulte une meilleure possibilité de différenciation des plans successifs du paysage.

Pour obtenir la seconde image il suffit de choisir la seconde bande de fréquences sur un bord d'une bande de transmission atmosphérique. Selon la largeur choisie pour la seconde bande et sa position sur la partie tombante de la courbe représentative de la bande de transmission atmosphérique considérée, l'effet de voile atmosphérique est plus ou moins prononcé. Des essais ont été réalisés
- sur un bord de la bande 8-12 µm, avec une seconde bande comprise entre 7 et 8 µm,
- sur un bord de la bande 3-5µm, avec une seconde bande comprise dans la bande d'absorption du gaz carbonique entre 4 et 4,2 µm.

L'avantage de choisir la seconde bande à l'intérieur de la bande d'absorption du gaz carbonique est que la proportion de CO₂ est pratiquement la même sur toute la surface de la terre et que les résultats obtenus ne dépendent pas des conditions météorologiques.

La figure 1 représente un premier exemple de caméra thermique pour la mise en oeuvre du procédé tel qu'il vient d'être décrit ci-avant. Cette caméra comporte une optique 1, schématisée par une lentille, qui fournit une image thermique à un dispositif de balayage 2. Le dispositif de balayage fait subir à l'image un déplacement vertical périodique avant de l'envoyer sur un miroir dichroïque G qui, par réflexion, envoie une partie du flux lumineux correspondant à l'image sur un premier détecteur infrarouge D1 et, par transmission, envoie une autre partie de ce flux sur un second détecteur infrarouge D2. Le premier détecteur D1 travaille dans une première bande de fréquences où la transmission atmosphérique est bonne ; il fournit, pour une vue donnée, des signaux électriques correspondant à ce qui a été appelé, dans ce qui précède, première image ou image de base. Le second détecteur D2 travaille dans une seconde bande de fréquences où la transmission atmosphérique est mauvaise ; il fournit, pour la même vue donnée, des signaux électriques correspondant à ce qui a été appelé, dans ce qui précède, seconde image.

Les signaux de sortie du détecteur D1 sont amplifiés dans un circuit d'amplification A1 avant d'être appliqués sur les entrées rouge et verte d'un dispositif de visualisation en couleur, 3. Les signaux de sortie du détecteur D2 sont amplifiés dans un circuit d'amplification A2 avant d'être appliqués sur l'entrée bleue du dispositif de visualisation 3. Ce dispositif de visualisation, grâce aux signaux qu'il reçoit, affiche sur son écran une image thermique présentant un certain relief.

La figure 2 représente un deuxième exemple de caméra thermique pour la mise en oeuvre du procédé. Cette caméra se distingue de celle selon la figure 1 uniquement par le fait qu'entre le dispositif de balayage 2 et les circuits d'amplification A1, A2 les moyens pour produire les signaux électriques correspondant à la première et à la seconde image, sont constitués par un seul détecteur D comportant des capteurs de deux types distincts par exemple par un empilement de type multi-puits quantiques ; il s'agit d'un détecteur bispectral qui délivre d'une part au circuit d'amplification A1 des signaux correspondant à une image dans une bande de fréquences où la transmission atmosphérique est bonne et d'autre part au circuit d'amplification A2 des signaux correspondant à une image dans une bande de fréquences où la transmission atmosphérique est mauvaise.

La figure 3 représente un troisième exemple de caméra thermique pour la mise en oeuvre du procédé. Cette caméra se distingue des précédentes en ce qu'elle comporte, en série entre son dispositif de balayage 2 et son dispositif de visualisation en couleur 3, un dispositif de filtrage F, un détecteur D', un circuit d'amplification A dont la sortie est reliée à la borne commune b0 d'un commutateur, C, à deux positions, dont la première borne de sortie, b1, est reliée aux entrées rouge et verte du dispositif de visualisation en couleur et dont la seconde borne de sortie, b2, est reliée à l'entrée bleue du dispositif de visualisation.

Le dispositif de filtrage F, selon la figure 3, comporte un disque porte-filtres, B, aussi appelé barillet, dont le plan est perpendiculaire au plan de la figure 3. Ce disque est dessiné en coupe par un plan parallèle au plan de la figure et passant par le centre du disque. Le disque B est muni de filtres tels que F1, F2. Le dispositif de filtrage F comporte, de plus, un moteur M dont l'axe, solidaire de l'axe du disque, fait tourner le disque dans son plan. En tournant le disque B interpose alternativement, dans le faisceau lumineux qui sort du dispositif de balayage 2, un filtre coupe-bande, tel que F1, qui laisse passer les infrarouges d'une bande de fréquences où la transmission atmosphérique est bonne et ne laisse pas passer les infrarouges d'une bande de fréquences où la transmission atmosphérique est mauvaise et un filtre coupe-bande tel que F2 qui se comporte à l'inverse du filtre F1 pour les deux bandes de fréquences considérées.

Le détecteur D' selon la figure 3 est un détecteur sensible dans les deux bandes de fréquences où les filtres tels que F1 et F2 sont passants. Ce détecteur délivre donc des signaux électroniques qui, en fonction du filtre interposé entre lui et le dispositif de balayage 2, correspondent alternativement à ce qui a été appelé première et seconde image dans ce qui précède. Une commande du déclenchement du commutateur 2, en synchronisme avec la rotation du disque porte-filtres B du dispositif de filtrage F, permet d'appliquer les signaux correspondant aux fréquences où la transmission atmosphérique est bonne sur les entrées rouge et verte du dispositif de visualisation 3 et les signaux correspondant aux fréquences où la transmission atmosphérique est mauvaise sur l'entrée bleue du dispositif de visualisation. La commande en synchronisme du commutateur 2 et du dispositif de filtrage F a été figurée par un trait interrompu sur la figure 3.

La présente invention n'est pas limitée aux exemples décrits et s'applique à toutes les variantes à la portée de l'homme du métier, en particulier celles qui consistent à utiliser des caméras sans balayage mais avec détecteurs du type matrice aux dimensions des images qui sont projetées à leur surface pour analyse; de telles caméras peuvent être représentées en supprimant dans les figures 1, 2 et 3 les dispositifs de balayage 2. Il est également possible d'affecter une autre couleur que le bleu, par exemple le vert, à l'affichage de la seconde image c'est-à-dire à l'image provenant de la bande de fréquences où la transmission atmosphérique est médiocre.

## Revendications

1. Procédé pour donner l'impression de profondeur dans une image, caractérisé en ce qu'il consiste, dans une caméra thermique, à générer des signaux électriques d'une première image thermique dans une première bande de fréquences où la transmission atmosphérique est bonne et d'une seconde image thermique dans une seconde bande de fréquences choisie intentionnellement parce que la transmission atmosphérique y est médiocre et produit un effet de voile atmosphérique plus ou moins prononcé en fonction de la distance d'observation, et à afficher simultanément la première et la seconde image thermique sur un même écran couleur, en utilisant pour cela des couleurs différentes pour la première et la seconde image.

2. Procédé selon la revendication 1, caractérisé en ce qu'il consiste à afficher la seconde image en bleu sur l'écran.

3. Caméra conçue pour fournir une image donnant l'impression de profondeur, caractérisée en ce qu'elle travaille uniquement en infrarouge et comporte des moyens de détection (1,2,G,D1,D2,A1,A2 ; 1,2,D,A1,A2 ; 1, 2, F, M, D, A) pour capter de la lumière infrarouge et fournir des premiers signaux électriques correspondant à une première image thermique dans une première bande de fréquences où la transmission atmosphérique est bonne et des seconds signaux électriques correspondant à une seconde image thermique dans une seconde bande de fréquences où la transmission atmosphérique y est médiocre et produit un effet de voile atmosphérique plus ou moins prononcé en fonction de la distance d'observation, et un dispositif de visualisation (3), avec écran couleur, comportant un premier et un second accès correspondant respectivement à des couleurs d'affichage différentes sur l'écran, les premiers et les seconds signaux étant fournis dans des conditions identiques respectivement au premier et au second accès.

4. Caméra selon la revendication 3, caractérisée en ce que les moyens de détection comportent un miroir dichroïque (G) pour recevoir la lumière infrarouge captée et deux détecteurs (D1, D2) disposés pour recevoir chacun une partie de la lumière infrarouge, l'un par réflexion l'autre par transmission.

5. Caméra selon la revendication 3, caractérisée en ce que les moyens de détection comportent un détecteur bispectral (D) pour recevoir la lumière infrarouge captée.

6. Caméra selon la revendication 3, caractérisée en ce qu'elle comporte un commutateur (C) à deux positions, avec une borne commune (bO) et deux autres bornes (b1, b2), en ce que les moyens de détection comportent un dispositif de filtrage dynamique (F, M), pour recevoir la lumière infrarouge captée, et un détecteur (D') couvrant les deux bandes de fréquences, en ce que le dispositif de filtrage dynamique dispose d'une commande pour, alternativement, transmettre la partie de la lumière correspondant à la première bande de fréquences en arrêtant la partie correspondant à la seconde bande et transmettre la partie correspondant à la seconde bande en arrêtant la partie correspondant à la première bande, en ce que le détecteur est couplé à la borne commune du commutateur et est disposé pour recevoir la partie de la lumière transmise par le dispositif de filtrage, en ce que les deux autres bornes du commutateur sont respectivement couplées au premier et au second accès du dispositif de visualisation (3) et en ce que le commutateur est déclenché en synchronisme avec la commande du dispositif de filtrage.

## Patentansprüche

1. Verfahren zum Schaffen des Eindrucks von Tiefe in einem Bild, dadurch gekennzeichnet, daß es bei einer Wärmebildkamera darin besteht, elektrische Signale eines ersten Wärmebildes in einem ersten Frequenzband, wo die atmosphärische Übertragung gut ist, und eines zweiten Wärmebildes in einem zweiten Frequenzband zu erzeugen, das absichtlich gewählt ist, weil die atmosphärische Übertragung dort mittelmäßig ist und einen in Abhängigkeit von der Beobachtungsentfernung mehr oder weniger ausgeprägten atmosphärischen Schleiereffekt erzeugt, und das erste und das zweite Wärmebild gleichzeitig auf ein und demselben Farbbildschirm anzuzeigen, wobei dazu unterschiedliche Farben für das erste und das zweite Bild verwendet werden.

2. Verfahren nach Anspruch 1, dadurch gekennzeichnet, daß es darin besteht, das zweite Bild auf dem Bildschirm blau anzuzeigen.

3. Kamera, die zum Liefern eines Bildes ausgelegt ist, das den Eindruck von Tiefe schafft, dadurch gekennzeichnet, daß sie alleine im Infrarotbereich arbeitet und Detektionsmittel (1, 2, G, D1, D2, A1, A2; 1, 2, D, A1, A2; 1, 2, F, M, D, A), um Infrarotlicht zu erfassen und erste elektrische Signale, die einem ersten Wärmebild in einem ersten Frequenzband entsprechen, wo die atmosphärische Übertragung gut ist, und zweite elektrische Signale zu liefern, die einem zweiten Wärmebild in einem zweiten Frequenzband entsprechen, wo die atmosphärische Übertragung mittelmäßig ist, und einen in Abhängigkeit von der Beobachtungsentfernung mehr oder weniger ausgeprägten atmosphärischen Schleiereffekt erzeugt, und eine Anzeigeeinrichtung (3) mit einem Farbbildschirm aufweist, die einen ersten und einen zweiten Zugang aufweist, die jeweils einer unterschiedlichen Anzeigefarbe auf dem Bildschirm entsprechen, wobei die ersten und die zweiten Signale am ersten bzw. zweiten Zugang unter identiischen Bedingungen geliefert werden.

4. Kamera nach Anspruch 3, dadurch gekennzeichnet, daß die Detektionsmittel einen dichroitischen Spiegel (G) zum Empfang des erfaßten Infrarotlichts und zwei Detektoren (D1, D2) aufweisen, die jeweils zum Empfang eines Teils des Infrarotlichts angeordnet sind, und zwar einerseits durch Reflexion und andererseits durch Übertragung.

5. Kamera nach Anspruch 3, dadurch gekennzeichnet, daß die Detektionsmittel einen bispektralen Detektor (D) aufweisen, um das erfaßte Infrarotlicht zu empfangen.

6. Kamera nach Anspruch 3, dadurch gekennzeichnet, daß sie einen Umschalter (C) mit zwei Positionen, mit einem gemeinsamen Anschluß (b0) und zwei weiteren Anschlüssen (bl, b2) aufweist, daß die Detektionsmittel eine dynamische Filtereinrichtung (F, M) aufweisen, um das erfaßte Infrarotlicht zu empfangen, sowie einen Detektor (D'), der die beiden Frequenzbänder abdeckt, daß die dynamische Filtereinrichtung über eine Steuerung verfügt, um abwechselnd den Teil des Lichts zu übertragen, der dem ersten Frequenzband entspricht, wobei der Teil gesperrt wird, der dem zweiten Band entspricht, und den Teil zu übertragen, der dem zweiten Band entspricht, wobei der Teil gesperrt wird, der dem ersten Band entspricht, daß der Detektor mit dem gemeinsamen Anschluß des Umschalters gekoppelt und dazu vorgesehen ist, den von der Filtereinrichtung übertragenen Teil des Lichts zu empfangen, daß die beiden anderen Anschlüsse des Umschalters mit dem ersten bzw. dem zweiten Zugang der Anzeigeeinrichtung (3) gekoppelt sind, und daß der Umschalter synchron mit der Steuerung der Filtereinrichtung ausgelöst wird.

## Claims

1. Method for giving the impression of depth in an image, characterised in that it consists, in a thermal camera, in generating electrical signals from a first thermal image in a first frequency band in which the atmospheric transmission is good and from a second thermal image in a second frequency band deliberately chosen because the atmospheric transmission therein is poor and produces a more or less pronounced effect of atmospheric haze as a function of the observation distance, and in simultaneously displaying the first and the second thermal image on the same colour monitor, using different colours for the first and the second image.

2. Method according to claim 1, characterised in that it consists in displaying the second image in blue on the monitor.

3. Camera designed to supply an image giving an impression of depth, characterised in that it operates solely in infra-red and includes detection means (1, 2, G, D1, D2, A1, A2 ; 1, 2, D, A1, A2 ; 1, 2, F, M, D, A) to sense infra-red light and supply first electrical signals corresponding to a first thermal image in a first frequency band in which the atmospheric transmission is good and second electrical signals corresponding to a second thermal image in a second frequency band in which the atmospheric transmission is poor and produces a more or less pronounced effect of atmospheric haze as a function of the observation distance, and a display unit (3), with a colour monitor, having a first and a second access corresponding respectively to the different display colours on the monitor, the first and the second signals being supplied in identical conditions to the first and the second access, respectively.

4. Camera according to claim 3, characterised in that the detection means include a dichroic mirror (G) for receiving the detected infra-red light and two detectors (D1, D2) arranged so as to each receive a proportion of the infra-red light, one by reflection and the other by transmission.

5. Camera according to claim 3, characterised in that the detection means include a bi-spectral detector (D) for receiving the detected infra-red light.

6. Camera according to claim 3, characterised in that it includes a two-position switch (C), with a common terminal (b0) and two other terminals (bl, b2), in that the detection means include a dynamic filtering device (F, M) for receiving the detected infra-red light, and a detector (D') covering the two frequency bands, in that the dynamic filtering device has a control for, alternately, transmitting the proportion of the light corresponding to the first frequency band whilst blocking the proportion corresponding to the second band, and transmitting the proportion corresponding to the second band whilst blocking the proportion corresponding to the first band, in that the detector is coupled to the common terminal of the switch and is disposed so as to receive the proportion of the light transmitted by the filtering device, in that the other two terminals of the switch are respectively coupled to the first and the second access of the display unit (3) and in that the switch is actuated in synchronism with the filtering device control.
